# EUROPEAN PATENT SPECIFICATION

(11) **EP 3 591 810 B1**
(45) Date of publication and mention of the grant of the patent: **22.04.2026**
(21) Application number: 19184808.4
(22) Date of filing: 05.07.2019
(51) Int. Cl.: H02K 5/00

(54) **ROTATING ELECTRIC MACHINE AND FOOT FASTENING SYSTEM FOR A ROTATING ELECTRIC MACHINE**
ROTIERENDE ELEKTRISCHE MASCHINE UND FUSSBEFESTIGUNGSSYSTEM FÜR EINE ROTIERENDE ELEKTRISCHE MASCHINE
MACHINE ÉLECTRIQUE ROTATIVE ET SYSTÈME DE FIXATION DE PIED POUR MACHINE ÉLECTRIQUE ROTATIVE

(30) Priority: 06.07.2018 US 201862694696 P
(43) Date of publication of application: 08.01.2020
(73) Proprietor: Weg Equipamentos Elétricos S.A., 89256-900 Jaraguá do Sul, SC (BR)
(72) Inventor: ADILSON PASSIG, Jhonatan, 89254800 JARAGUÁ DO SUL, SC (BR); LAFIN, Patrick, 89254800 JARAGUÁ DO SUL, SC (BR); SCHMIDT FERREIRA, Alexandre, 89254800 JARAGUÁ DO SUL, SC (BR); MARIN KIST, Leandro Felipe, 89254800 JARAGUÁ DO SUL, SC (BR)
(74) Representative: Cabinet Beaumont

(56) References cited:
- EP-A1- 1 349 258
- DE-A1- 10 319 187
- JP-A- H09 247 885
- US-A1- 2017 338 714

## Description

### FIELD OF THE INVENTION

The present invention relates to a rotating electric machine and, more specifically, to a rotating electric machine with a foot fastening system.

### BACKGROUND OF THE INVENTION

Several different types of electric machine shells are known in the art, which basically comprise a shell where the parts and components of the machines are enclosed.

As known to those skilled in the art, the shell is adapted to enclose a number of internal components and also to receive a series of external fittings and components, which are secured to the shell by different fastening systems.

For example, the shells usually comprise support or attachment devices for connecting and stabilizing the shell to surfaces, such as bases or even other machines. Such support devices are commonly named "feet".

In the already known machines, the feet are fixed to the shells by means of more than one screw, which must be unscrewed to remove the feet. Although this type of solution provides some flexibility, it is time-consuming and it requires the use of extra parts (screws).

Document EP 1 349 258 discloses a connection structure for detachably fixing a support to an electric motor. The structure is substantially constituted by two elements that can be engaged to one another by way of an interlocking action that is substantially of the truncated-pyramid type.

Document JP H09 247885 discloses to a motor having a frame with separated mounting legs. The separated mounting legs are connected to the frame with bolts.

Document DE10319187A1 discloses an electrical machine comprising a first housing part and a second housing part, wherein the first housing part and the second housing part comprise integrally formed latching elements (bayonet connection), wherein the engagement of the two parts is achieved by a relative rotational movement of the housing parts.

Document US2017/0338714 discloses a linear actuador and at least one box with an openable cover. The box comprises a horizontal hinge pin in each side as well as a track in each side, which the respective hinge pins reach into, and where the track on a first run is horizontal and led out to a free edge such that the cover can be placed on the box in a horizontal movement and that the track has a second run in continuation of the first run, and where the second run has a sloping course, which extends down towards the bottom of the box such that the respective hinge pins when the cover is closed are led into the second sloping course of the track.

### OBJECTS OF THE INVENTION

It is an object of the present invention to provide a rotating electric machine having a foot fastening system which provides fastening versatility without causing high impact on the manufacturing and assembly process of the electric machine.

It is another objective of the present invention to provide a foot fastening system of an electric machine that guarantees the fastening and high robustness without causing high impact on the manufacturing and assembly process of the electric machine.

It is still another object of the present invention to provide a rotating electric machine having a foot fastening system, wherein the foot attachment is provided by means of snap-fit.

It is yet another object of the present invention to provide a rotating electric machine having a foot fastening system which can be easily and simply mounted to the shell with only two movements: a first vertical approach movement and a second axial displacement movement until a pressure lock occurs.

### SUMMARY OF THE INVENTION

The present invention refers to a rotating electric machine with a foot fastening system according to claim 1 and a foot fastening system for a rotating electrical machine according to claim 5. The longitudinal rip of the at least one receiving and guiding portion may narrow along the channel, in such a way that the width of the rip near the open end of the channel is greater than the width of the rip near the closed end of the channel.

In one embodiment of the invention, the foot may comprise a flat base, and the cut out elongated portion of the snap-fit portion is created in the base by forming a U-shaped cut on the base.

### BRIEF DESCRIPTION OF THE DRAWINGS

The present invention will be described in more detail hereinafter with reference to the accompanying drawings in which:
**Figure 1** is a lateral view of an electric machine in accordance with the present invention;
**Figure 2** is a bottom perspective view of an electric machine according to the present invention, the shell being shown without the foot;
**Figure 3** is an enlarged view of a receiving and guiding portion of the receiving portion of the electric machine in accordance with the present invention;
**Figure 4** - is a top perspective view of the foot of an electric machine according to the present invention; and
**Figure 5** - is a bottom perspective view of the foot of an electric machine according to the present invention.

### DETAILED DESCRIPTION OF THE INVENTION

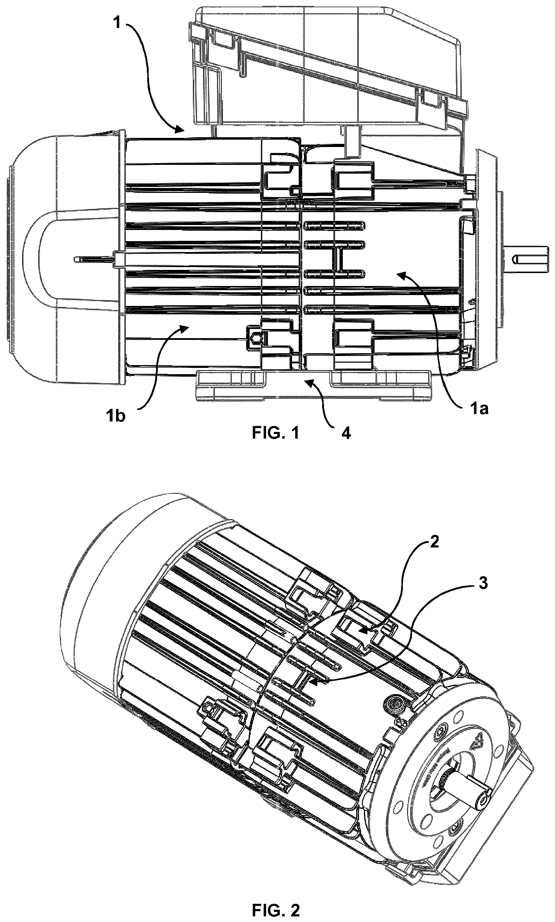

Figure 1 shows an electric machine incorporating a foot fastening system in accordance with one embodiment of the present invention.

Although the present invention is depicted incorporated in an electric motor, it should be understood that the solution of the invention could also be applied to other electrical machines comprising a housing, for example, any rotating electric machine having such characteristics.

As can be seen in Figure 1, the electric motor comprises a shell split in the axial direction 1, formed by a first shell part 1a and a second shell part 1b.

It should be pointed out, however, that the present invention could be embodied in electric machines with shells having different constructive characteristics, such as, for example, of the type comprising a one-piece main shell with end caps.

In Figure 1, the lower part of the shell has a foot fastening system according to the present invention.

The fastening system of the present invention comprises a receiving portion which includes a receiving and guiding portion 2 and at least a locking portion 3, which receives corresponding portions of a foot 4.

The receiving portion comprises two pairs of receiving and guide portions 2 and a locking portion 3. The two pairs of receiving and guiding portion 2 are spaced from each other, whereby the locking portion 3 is arranged centrally between the spaced pairs. The locking portion 3 could be arranged on any housing part as long as it is between the position of the receiving and guiding portions 2, and the receiving portion could have only two spaced receiving and guide portions 2.

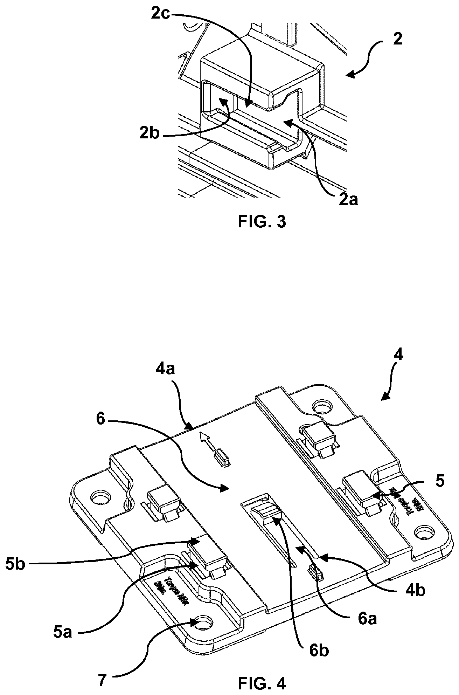

Figure 3 shows an enlarged view of a receiving and guiding 2. As can be seen in that figure, the receiving and guiding portion 2 comprise a channel with an open end 2a and a closed end 2b. The outer wall of the channel has a longitudinal rip 2c, so that the channel cavity has a T shaped cross-section.

In one embodiment of the invention, longitudinal rip 2c narrows along the channel such that the width of the rip near the open end 2a of the channel is greater than the width of the rip proximate the closed end 2b of the channel.

As best illustrated in Figure 2, the locking portion 3 comprises a protruding wall 3. Naturally, the locking portion could have another shape, such as, for example, wall segments close to one another.

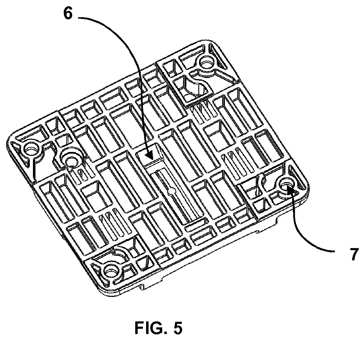

Figures 4 and 5 illustrate one embodiment of the foot of the fastening system of the present invention.

The foot 4 has at least one protruding portion 5 configured to be received by the at least one receiving and guiding portion 2 and a snap-fit portion 6 which cooperates with the locking portion 3.

As shown in Figures 4 and 5, the foot comprises two pairs of lateral protruding portions 5 and a central snap-fit portion 6 arranged between the pairs of lateral protruding portions 5.

The central snap-fit portion 6 of the foot comprises a cut out elongated portion 6a with a shoulder on the free end 6b, so as to form a resilient portion whose shoulder portion 6b cooperates with the locking portion 3 of the shell.

In the embodiment shown in Figures 4 and 5, the foot 4 comprises a surface 4a, the cut out elongated portion 6a of the snap-fit portion 6 being created in the surface 4a by forming a U-shaped cut 4b on the surface 4a. The surface may be flat, as shown in the drawings, or can have any other suitable format.

The lateral protruding portions 5 are formed as a rail portion, whose neck 5a has a width smaller than the smaller width of the longitudinal rip 2c of the receiving and guiding portion 2 and whose head 5b has a width greater than the smaller width of the longitudinal rip 2c.

For the assembly, the foot is vertically brought to the shell, so that the protruding portions 5 are received by the corresponding receiving and guiding portions 2. After that, the foot is axially displaced until the locking occurs by snap-fit between the central snap-fit portion 6 and the locking portion 3 of the shell ("snap-fit" locking type, wherein the shoulder portion 6b of the snap-fit portion 6 is pressed against the locking portion 3 of the shell).

Thus, the foot can be easily and simply mounted to the shell with only two movements: the first vertical approach movement and the second axial displacement movement until pressure locking occurs.

In the embodiment of the invention shown in the figures, wherein the machine shell is split in the axial direction, each receiving and guiding portion 2 of each pair of receiving and guiding portions 2 is arranged in one of the shell parts 1a, 1b.

Thus, the protruding portions 5 of each pair of lateral protruding portions 5 is axially spaced, correspondingly to the shaft spacing between the receiving and guiding portions 2 of each pair of receiving and guiding portions 2.

In an embodiment of the present invention, the shell 1 of the electric machine may have more than one receiving portion, so that three different possibilities of foot assembly 4 are provided.

As shown in the figures, the foot also has holes 7 for screws that attach the foot to a structure or machine (not shown).

Having described examples of embodiments of the present invention, it should be understood that the scope of the present invention encompasses other possible variations of the inventive concept described, being limited solely by the wording of the appended claims, including the possible equivalents.

## Claims

1. A rotating electric machine of the type comprising a shell housing, an active core with a rotor and a stator, the rotor being mounted on a shaft, wherein the machine comprises a foot fastening system including:
at least one receiving portion, formed in the shell, which includes two pairs of lateral receiving and guiding portions (2) and at least one central locking portion (3);
the two pairs of receiving and guiding portions (2) being configured to receive corresponding two pairs of lateral protruding portions (5) of a foot (4),
wherein the central locking portion (3) comprises a protruding wall (3) arranged between the pairs of lateral receiving and guiding portions (2);
wherein the foot (4) comprises a central snap-fit portion (6) arranged between the pairs of lateral protruding portions (5);
the central snap-fit portion (6) comprising a cut out elongated portion (6a) with a shoulder (6b) on the free end, so as to form a resilient portion whose shoulder cooperates with the protruding wall (3);
and at least one receiving and guiding portion (2) comprises a channel with an open end (2a), a closed end (2b) and an outer wall, the outer wall having a longitudinal rip (2c);
and the corresponding protruding portion (5) that is received in said at least one receiving and guiding portion (2) is formed as a rail portion having a neck (5a) with a width smaller than the smaller width of the longitudinal rip (2c) of said at least one receiving and guiding portion (2) and a head (5b) having a width greater than the smaller width of the longitudinal rip (2c).

2. Machine according to claim 1, wherein the snap fit portion (6) is arranged centrally between the lateral protruding portions (5).

3. Machine according to claim 1 , wherein in that the longitudinal rip (2c) of the at least one receiving and guiding portion (2) narrows along the channel, so that the width of the tear near the end open (2a) of the channel is greater than the width of the slot near the closed end (2b) of the channel.

4. Machine according to claim 1, wherein the foot (4) comprises a substantially flat base (4a), and the cut out elongate portion (6a) of the snap-fit portion (6) is formed in the base (4a) by forming a U-shaped cut out (4b) in the flat base (4a).

5. A foot fastening system for a rotating electrical machine of the type comprising a shell housing, an active core having a rotor and a stator, the rotor being mounted on a shaft,
wherein the shell has a receiving portion formed in the shell, which includes two pairs of lateral receiving and guiding portions (2) and at least one central locking portion (3),
wherein the foot fastening system comprises a foot (4), which comprises corresponding two pairs of lateral protruding portions (5) configured to be received in the two pairs of lateral receiving and guiding portions (2),
wherein the central locking portion (3) comprises a protruding wall (3) arranged between the pairs of lateral receiving and guiding portions (2),
wherein the foot (4) comprises a central snap-fit portion (6) arranged between the pairs of lateral protruding portions (5);
the central snap-fit portion (6) comprising a cut out elongated portion (6a) with a shoulder (6b) on the free end, so as to form a resilient portion whose shoulder cooperates with the protruding wall (3);
and at least one receiving and guiding portion (2) comprises a channel with an open end (2a), a closed end (2b) and an outer wall, the outer wall having a longitudinal rip (2c);
and the corresponding protruding portion (5) that is received in said at least one receiving and guiding portion (2) is formed as a rail portion having a neck (5a) with a width smaller than the smaller width of the longitudinal rip (2c) of said at least one receiving and guiding portion (2) and a head (5b) having a width greater than the smaller width of the longitudinal rip (2c).

6. System according to claim 5, wherein the snap fit portion (6) is arranged centrally between the lateral protruding portions (5).

7. System according to claim 5, wherein the longitudinal rip (2c) of the at least one receiving and guiding portion (2) becomes narrower along the channel so that the width of the rip near the open end (2a) of the channel is greater than the width of the rip proximate the closed end (2b) of the channel.

8. System according to claim 5, wherein the foot (4) comprises a substantially flat base (4a), and the cut out elongated portion (6a) of the snap-fit portion (6) is formed in (4a) by forming a U-shaped cut out (4b) in the flat base (4a).

## Patentansprüche

1. Eine rotierende elektrische Maschine von der Art, die ein Gehäuse, einen aktiven Kern mit einem Rotor und einem Stator aufweist, wobei der Rotor auf einer Welle montiert ist, wobei die Maschine ein Fuß-Befestigungs-System aufweist, das Folgendes aufweist:
wenigstens einen Aufnahme-Abschnitt, ausgebildet in dem Gehäuse, der zwei Paare von seitlichen Aufnahme- und Führungs-Abschnitten (2) und wenigstens einen zentralen Verriegelungs-Abschnitt (3) aufweist;
wobei die zwei Paare von Aufnahme- und Führungs-Abschnitten (2) eingerichtet sind zum Aufnehmen von entsprechenden zwei Paaren von seitlichen vorragenden Abschnitten (5) eines Fußes (4);
wobei der zentrale Verriegelungs-Abschnitt (3) eine vorragende Wand (3) aufweist, die zwischen den Paaren von seitlichen Aufnahme- und
Führungs-Abschnitten (2) angeordnet ist;
wobei der Fuß (4) einen zentralen Schnapp-Abschnitt (6) aufweist, der zwischen den Paaren von seitlichen vorragenden Abschnitten (5) angeordnet ist;
wobei der zentrale Schnapp-Abschnitt (6) einen ausgeschnittenen länglichen Abschnitt (6a) mit einer Schulter (6b) an dem freien Ende aufweist, um einen federnden Abschnitt auszubilden, dessen Schulter mit der vorragenden Wand (3) zusammenwirkt;
und wenigstens ein Aufnahme- und Führungs-Abschnitt (2) einen Kanal mit einem offenen Ende (2a), einem geschlossenen Ende (2b) und einer äußeren Wand aufweist, wobei die äußere Wand eine Längs-Rippe (2c) hat;
und der entsprechende vorragende Abschnitt (5), der in dem wenigstens einen Aufnahme- und Führungs-Abschnitt (2) aufgenommen ist, als ein Schienen-Abschnitt ausgebildet ist, der einen Hals (5a) mit einer Breite kleiner als die kleinere Breite der Längs-Rippe (2c) des wenigstens einen Aufnahme- und Führungs-Abschnitts (2) und einen Kopf (5b) mit einer Breite größer als die kleinere Breite der Längs-Rippe (2c) hat.

2. Maschine nach Anspruch 1, wobei der Schnapp-Abschnitt (6) zentral zwischen den seitlichen vorragenden Abschnitten (5) angeordnet ist.

3. Maschine nach Anspruch 1, wobei die Längs-Rippe (2c) des wenigstens einen Aufnahme- und Führungs-Abschnitts (2) entlang des Kanals schmaler wird, so dass die Breite der Rippe nahe dem offenen Ende (2a) des Kanals größer ist als die Breite der Rippe nahe dem geschlossenen Ende (2b) des Kanals.

4. Maschine nach Anspruch 1, wobei der Fuß (4) eine im Wesentlichen flache Basis (4a) aufweist, und der ausgeschnittene längliche Abschnitt (6a) des Schnapp-Abschnitts (6) in der Basis (4a) ausgebildet ist durch Ausbilden eines U-förmigen Ausschnitts (4b) in der flachen Basis (4a).

5. Ein Fuß-Befestigungs-System für eine rotierende elektrische Maschine von der Art, die ein Gehäuse, einen aktiven Kern mit einem Rotor und einem Stator aufweist, wobei der Rotor auf einer Welle montiert ist,
wobei das Gehäuse einen Aufnahme-Abschnitt hat, der in dem Gehäuse ausgebildet ist, der zwei Paare von seitlichen Aufnahme- und Führungs-Abschnitten (2) und wenigstens einen zentralen Verriegelungs-Abschnitt (3) aufweist,
wobei das Fuß-Befestigungs-System einen Fuß (4) aufweist, der entsprechende zwei Paare von seitlichen vorragenden Abschnitten (5) aufweist, die eingerichtet sind zum Aufgenommen-Werden in den zwei Paaren von seitlichen Aufnahme- und Führungs-Abschnitten (2),
wobei der zentrale Verriegelungs-Abschnitt (3) eine vorragende Wand (3) aufweist, die zwischen den Paaren von seitlichen Aufnahme- und Führungs-Abschnitten (2) angeordnet ist,
wobei der Fuß (4) einen zentralen Schnapp-Abschnitt (6) aufweist, der zwischen den Paaren von seitlichen vorragenden Abschnitten (5) angeordnet ist,
wobei der zentrale Schnapp-Abschnitt (6) einen ausgeschnittenen länglichen Abschnitt (6a) mit einer Schulter (6b) an dem freien Ende aufweist, um einen federnden Abschnitt auszubilden, dessen Schulter mit der vorragenden Wand (3) zusammenwirkt;
und wenigstens ein Aufnahme- und Führungs-Abschnitt (2) einen Kanal mit einem offenen Ende (2a), einem geschlossenen Ende (2b) und einer äußeren Wand aufweist, wobei die äußere Wand eine Längs-Rippe (2c) hat;
und der entsprechende vorragende Abschnitt (5), der in dem wenigstens einen Aufnahme- und Führungs-Abschnitt (2) aufgenommen ist, als ein Schienen-Abschnitt ausgebildet ist, der einen Hals (5a) mit einer Breite kleiner als die kleinere Breite der Längs-Rippe (2c) des wenigstens einen Aufnahme- und Führungs-Abschnitts (2) und einen Kopf (5b) mit einer Breite größer als die kleinere Breite der Längs-Rippe (2c) hat.

6. System nach Anspruch 5, wobei der Schnapp-Abschnitt (6) zentral zwischen den seitlichen vorragenden Abschnitten (5) angeordnet ist.

7. System nach Anspruch 5, wobei die Längs-Rippe (2c) des wenigstens einen Aufnahme- und Führungs-Abschnitts (2) entlang des Kanals schmaler wird, so dass die Breite der Rippe nahe dem offenen Ende (2a) des Kanals größer ist als die Breite der Rippe nahe dem geschlossenen Ende (2b) des Kanals.

8. System nach Anspruch 5, wobei der Fuß (4) eine im Wesentlichen flache Basis (4a) aufweist, und der ausgeschnittene längliche Abschnitt (6a) des Schnapp-Abschnitts (6) in (4a) ausgebildet ist durch Ausbilden eines U-förmigen Ausschnitts (4b) in der flachen Basis (4a).

## Revendications

1. Machine électrique à rotation du type comprenant un carter, un noyau actif ayant un rotor et un stator, le rotor étant monté sur un arbre, dans laquelle la machine comprend un système de fixation de pied comportant :
au moins une partie de réception, formée dans le carter, qui comporte deux paires de parties latérales de réception et de guidage (2) et au moins une partie centrale de verrouillage (3) ;
les deux paires de parties de réception et de guidage (2) étant configurées pour recevoir deux paires correspondantes de parties latérales saillantes (5) d'un pied (4) ;
dans lequel la partie centrale de verrouillage (3) comprend une paroi saillante (3) agencé entre les paires de parties latérales de réception et de guidage (2) ;
dans lequel le pied (4) comprend une partie centrale à enclenchement (6) agencée entre les paires de parties latérales saillantes (5) ;
la partie centrale à enclenchement (6) comprenant une partie allongée découpée (6a) avec un épaulement (6b) à l'extrémité libre, de sorte à former une partie résiliente dont l'épaulement coopère avec la paroi saillante (3) ;
et au moins une partie de réception et de guidage (2) comprend un canal avec une extrémité ouverte (2a), une extrémité fermée (2b) et une paroi extérieure, la paroi extérieure ayant une fente longitudinale (2c) ;
et la partie saillante correspondante (5) qui est reçue dans ladite au moins une partie de réception et de guidage (2) est formée comme une partie de rail ayant un col (5a) d'une largeur inférieure à la plus petite largeur de la fente longitudinale (2c) de ladite au moins une partie de réception et de guidage (2) et une tête (5b) d'une largeur supérieure à la plus petite largeur de la fente longitudinale (2c).

2. Machine selon la revendication 1, dans laquelle la partie centrale à enclenchement (6) est agencée de façon centrale entre les parties latérales saillantes (5).

3. Machine selon la revendication 1, dans laquelle la fente longitudinale (2c) de l'au moins une partie de réception et de guidage (2) se rétrécit le long du canal, de sorte que la largeur de la fente près de l'extrémité ouverte (2a) du canal soit supérieure à la largeur de la fente près de l'extrémité fermée (2b) du canal.

4. Machine selon la revendication 1, dans laquelle le pied (4) comprend une base sensiblement plate (4a), et la partie allongée découpée (6a) de la partie à enclenchement (6) est formée dans la base (4a) en formant une découpe en forme de U (4b) dans la base plate (4a).

5. Système de fixation à pied pour une machine électrique à rotation du type comprenant un carter, un noyau actif ayant un rotor et un stator, le rotor étant monté sur un arbre,
dans lequel le carter a une partie de réception formée dans le carter qui comporte deux paires de parties latérales de réception et de guidage (2) et au moins une partie centrale de verrouillage (3),
dans lequel le système de fixation à pied comprend un pied (4) qui comprend deux paires correspondantes de parties latérales saillantes (5) configurées pour être reçues dans les deux paires de parties latérales de réception et de guidage (2),
dans lequel la partie centrale de verrouillage (3) comprend une paroi saillante (3) agencée entre les paires de parties latérales de réception et de guidage (2) ;
dans lequel le pied (4) comprend une partie centrale à enclenchement (6) agencée entre les paires de parties latérales saillantes (5) ;
la partie centrale à enclenchement (6) comprenant une partie allongée découpée (6a) avec un épaulement (6b) à l'extrémité libre, de sorte à former une partie résiliente dont l'épaulement coopère avec la paroi saillante (3) ;
et au moins une partie de réception et de guidage (2) comprend un canal avec une extrémité ouverte (2a), une extrémité fermée (2b) et une paroi extérieure, la paroi extérieure ayant une fente longitudinale (2c) ;
et la partie saillante correspondante (5) qui est reçue dans ladite au moins une partie de réception et de guidage (2) est formée comme une partie de rail ayant un col (5a) d'une largeur inférieure à la plus petite largeur de la fente longitudinale (2c) de ladite au moins une partie de réception et de guidage (2) et une tête (5b) d'une largeur supérieure à la plus petite largeur de la fente longitudinale (2c).

6. Système selon la revendication 5, dans lequel la partie centrale à enclenchement (6) est agencée de façon centrale entre les parties latérales saillantes (5).

7. Système selon la revendication 5, dans lequel la fente longitudinale (2c) de l'au moins une partie de réception et de guidage (2) se rétrécit le long du canal, de sorte que la largeur de la fente près de l'extrémité ouverte (2a) du canal soit supérieure à la largeur de la fente près de l'extrémité fermée (2b) du canal.

8. Système selon la revendication 5, dans lequel le pied (4) comprend une base sensiblement plate (4a), et la partie allongée découpée (6a) de la partie à enclenchement (6) est formée dans la base (4a) en formant une découpe en forme de U (4b) dans la base plate (4a).
